# EUROPEAN PATENT SPECIFICATION

(11) **EP 3 901 447 B1**
(45) Date of publication and mention of the grant of the patent: **03.09.2025**
(21) Application number: 19899868.4
(22) Date of filing: 11.07.2019
(51) Int. Cl.: F02N 11/08, F02D 29/02, F02N 11/10

(54) **SADDLE-RIDDEN VEHICLE**
SATTELFAHRZEUG
VÉHICULE À SELLE

(30) Priority: 21.12.2018 JP 2018240213
(43) Date of publication of application: 27.10.2021
(73) Proprietor: Yamaha Hatsudoki Kabushiki Kaisha, Iwata-shi, Shizuoka 438-8501 (JP)
(72) Inventor: KIKUCHI, Ryota, Iwata-shi, Shizuoka 438-8501 (JP); HIRATA, Go, Iwata-shi, Shizuoka 438-8501 (JP); NISHIMURA, Tetsuhiko, Iwata-shi, Shizuoka 438-8501 (JP); KAWARABAYASHI, Naoki, Iwata-shi, Shizuoka 438-8501 (JP)
(74) Representative: Marks & Clerk LLP
(86) International application number: PCT/JP2019/027555
(87) International publication number: WO 2020/129287

(56) References cited:
- WO-A1-2016/056363
- WO-A2-2013/093343
- FR-A1- 2 830 288
- JP-A- 2001 165 020
- JP-A- 2004 156 589
- JP-A- 2007 181 364
- JP-A- 2011 001 947
- JP-A- 2011 001 947
- JP-A- 2012 059 759
- JP-A- 2015 003 682

## Description

### [Technical Field]

The present invention relates to a straddled vehicle having an idling stop function.

### [Background Art]

In a small-sized straddled vehicle having an idling stop function, an ISG (Integrated Starter Generator) having the function of a starter motor is used, for example. Because having functions of a starter motor and a generator, the ISG is directly attached to a crankshaft without a reduction gear. Therefore, in a case where an ISG is provided in a large-sized straddled vehicle having large displacement, a large torque is required to restart an engine. Therefore, a large-sized ISG is required, and the size of a vehicle further increases.

As such, in a case where an idling stop function is provided in a large-sized straddled vehicle, it is considered that a starter motor not having a power generating function is used. For example, in a straddled vehicle described in Patent Document 1, an electrical connection state between a battery and a starter motor is changed with the use of a starter relay, whereby an engine is started.

[Patent Document 1] JP 2005-264929 A

### [Summary of Invention]

### [Technical Problem]

Here, the starter relay described in Patent Document 1 is a so-called mechanical relay and includes a relay coil and a relay switch. The relay switch is turned ON when the relay coil is excited, and a voltage of a battery is provided to a starter motor. When the relay switch is turned ON, an electric current corresponding to a torque required to start an engine flows through a contact of the switch momentarily.

The contact of the switch deteriorates in accordance with the magnitude of a current flowing in the switch and frequency of change of state of the switch. Therefore, in a case where the state of the relay switch is changed each time the engine that is stopped by the idling stop function is restarted in a large-sized straddled vehicle, the useful life of the relay switch is shortened. Therefore, the relay switch is required to be replaced frequently.

Further, in the above-mentioned starter relay, the state of the switch may be changed due to external vibration or external impact. Therefore, the starter relay is basically attached to a vehicle main body via a buffer member. In this case, flexibility in layout of vehicle component members is restricted in order to ensure an installation space for the starter relay and a buffer member.

An object of the present invention is to provide a straddled vehicle in which frequency of maintenance for replacement of vehicle component members is reduced and flexibility in layout of the vehicle component members is improved.

### [Solution to Problem]

(1) A straddled vehicle according to one aspect of the present invention includes a vehicle main body that includes a frame, an engine supported at the frame, a battery, a starter motor that rotates a crankshaft of the engine by electric power of the battery and a controller that executes idling stop control of the engine, and a semiconductor relay that electrically connects the battery and the starter motor to each other such that electric power is supplied from the battery to the starter motor, in a case where the engine is in a stop state and a predetermined start-up condition is satisfied, wherein the semiconductor relay is rigidly fixed to the vehicle main body.

In the straddled vehicle, the semiconductor relay is used to change between a state in which power is supplied from the battery to the starter motor and a state in which power is not supplied from the battery to the starter motor. In the semiconductor relay, the electrical connection relationship between the battery and the starter motor is changed by an electrical circuit including a semiconductor instead of a stationary contact and a movable contact of a mechanical relay. The semiconductor relay is unlikely to deteriorate in accordance with the magnitude of a current flowing in the semiconductor relay and frequency of change of state as compared to the mechanical relay. Therefore, frequency of replacement of the semiconductor relay is reduced.

Further, due to not having a mechanical movable portion, the semiconductor relay is resistant to external vibration and external impact. Therefore, even in a case where being rigidly fixed to the vehicle main body, the semiconductor relay is unlikely to run erroneously. Therefore, it is not necessary to provide a buffer member in the semiconductor relay. Thus, it is not necessary to ensure a buffer member for the semiconductor relay or an installation space for the buffer member in the straddled vehicle.

As a result, frequency of maintenance for replacement of the vehicle component members is reduced, and flexibility in layout of the vehicle component members is improved.

(2) The semiconductor relay may be rigidly fixed to the starter motor.

In this case, the semiconductor relay can be handled integrally with the starter motor.

(3) The semiconductor relay may be rigidly fixed to the engine.

In this case, the semiconductor relay can be handled integrally with the engine.

(4) The semiconductor relay may be rigidly fixed to the frame.

In this case, the semiconductor relay can be handled integrally with the frame.

(5) The semiconductor relay is mounted on a circuit board.

In this case, the circuit board is attached to the vehicle main body, so that the semiconductor relay can be rigidly fixed to the vehicle main body.

(6) The controller may be mounted on the circuit board, and the semiconductor relay may be rigidly fixed to the controller via the circuit board.

In this case, the semiconductor relay can be handled integrally with the controller. Further, the circuit board is attached to the vehicle main body, so that the controller can be rigidly fixed to the vehicle main body in addition to the semiconductor relay.

(7) The straddled vehicle further includes a change determiner that determines whether the start-up condition is satisfied, and changes a state of the semiconductor relay between a connection state in which the battery and the starter motor are electrically connected to each other and a disconnection state in which the battery and the starter motor are not electrically connected to each other based on a result of determination, wherein the change determiner may be further mounted on the circuit board.

In this case, running of the starter motor can be accurately controlled in accordance with the startup condition. Further, the semiconductor relay and the change determiner can be integrally handled.

(8) The straddled vehicle may further include a temperature detector that detects a temperature of the semiconductor relay, wherein the controller does not have to stop the engine by the idling stop control in a case where a temperature detected by the temperature detector is higher than a predetermined threshold value.

In this case, in a case where the temperature of the semiconductor relay is higher than the threshold value, the engine is not stopped by the idling stop control. Thus, poor starting performance of the engine due to erroneous running of the semiconductor relay is prevented during restart of the engine caused by the idling stop control.

### [Advantageous Effects of Invention]

The present invention enables a reduction in frequency of maintenance for replacement of vehicle component members and improvement of layout of the vehicle component members.

### [Brief Description of the Drawings]

[FIG. 1] Fig. 1 is a schematic side view showing the schematic configuration of a motorcycle according to one embodiment of the present invention.
[FIG. 2] Fig. 2 is a schematic diagram for explaining an electric system for starting an engine of Fig. 1.
[FIG. 3] Fig. 3 is a diagram showing one example of a startup condition.
[FIG. 4] Fig. 4 is a side view showing another example of a position to which a change unit is attached in the motorcycle.
[FIG. 5] Fig. 5 is a side view showing another example of a position to which the change unit is attached in the motorcycle.
[FIG. 6] Fig. 6 is a side view showing another example of a position to which the change unit is attached in the motorcycle.

### [Description of Embodiments]

A straddled vehicle according to one embodiment of the present invention will be described below with reference to the drawings. In the following description, a motorcycle is described as one example of the straddled vehicle.

### [1] Schematic Configuration of Motorcycle

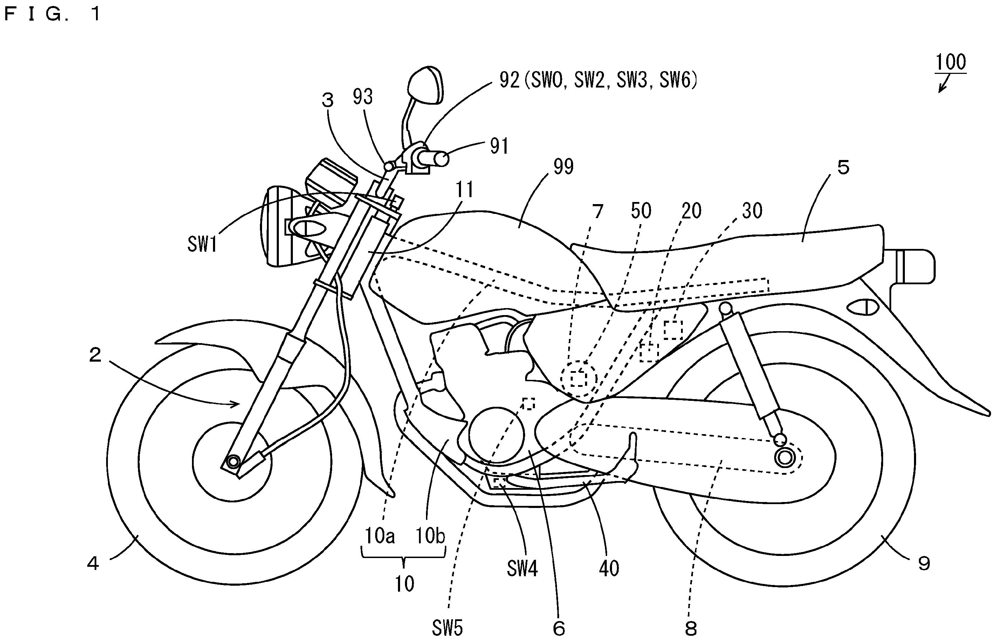

Fig. 1 is a schematic side view showing the schematic configuration of the motorcycle according to the one embodiment. The motorcycle 100 of Fig. 1 includes a head pipe 11 and a body frame 10. The body frame 10 includes an upper frame 10a and a lower frame 10b.

The upper frame 10a is formed to extend rearwardly from the head pipe 11. A front half of the lower frame 10b extends obliquely rearwardly and downwardly by a certain distance from the head pipe 11 and is curved rearwardly. A rear half of the lower frame 10b extends obliquely rearwardly and upwardly and is connected to the upper frame 10a.

A front fork 2 is provided at the head pipe 11 to be swingable in a left-and-right direction. A handle 3 is attached to the upper end of the front fork 2, and a front wheel 4 is rotatably attached to the lower end of the front fork 2.

Handle grips 91 are provided at both of the left and right ends of the handle 3. A right handle grip 91 also serves as an acceleration grip for adjusting a degree of opening of a throttle valve of an engine 6, described below. A switch unit 92 is provided on the handle 3 to be adjacent to each handle grip 91. Further, a clutch lever 93 that is operable with a rider holding the left handle grip 91 is provided at a left portion of the handle 3.

A fuel tank 99 and a seat 5 are provided on the upper frame 10a to be arranged rearwardly in this order. The engine 6 is supported by the body frame 10 below the fuel tank 99. The engine 6 includes a fuel injection device and a throttle valve for supplying a fuel-air mixture to a combustion chamber, an ignition device for combusting the fuel-air mixture in the combustion chamber, a piston provided to be capable of reciprocating in a cylinder, and a crankshaft. During running (rotation) of the engine 6, a fuel injection amount of the fuel injection device, an opening of the throttle valve (throttle opening) and timing for igniting a fuel-air mixture by the ignition device are controlled. Thus, the piston reciprocates in the cylinder, the reciprocating motion is converted into a rotation motion of the crankshaft and a rotational force of the crankshaft is output.

A starter motor 7 for starting the engine 6 is provided to be adjacent to the engine 6. An ECU (Engine Control Unit) 20 and a battery 30 are supported by the body frame 10 below the seat 5. Electric power accumulated in the battery 30 is supplied to various electric appliances provided in the motorcycle 100 as necessary. These electric appliances include a head lamp, a flasher and so on, in addition to the starter motor 7 and the ECU 20, described above.

A side stand 40 is attached to the lower end of the body frame 10 to be capable of supporting the motorcycle 100. The side stand 40 is configured to be changeable between a supporting state, in which the side stand 40 supports the motorcycle 100 on a road surface, and a non-supporting state in which the side stand 40 does not support the motorcycle 100 on the road surface. In the example of Fig. 1, the side stand 40 is in the non-supporting state.

A rear arm 8 is attached to the engine 6 to extend rearwardly from the rear end of the engine 6. A rear wheel 9 is rotatably attached to the rear end of the rear arm 8. With the clutch lever 93 not operated, a rotational force of the crankshaft that is output from the engine 6 is transmitted to the rear wheel 9 via a clutch (not shown). Thus, the rotation of the rear wheel 9 is driven, and a thrust force of the motorcycle 100 is generated.

A transmission mechanism (not shown) is provided in the above-mentioned engine 6. Thus, during travelling of the motorcycle 100, a rotational force transmitted from the crankshaft of the engine 6 to the rear wheel 9 is adjusted in accordance with a gear position of the transmission mechanism.

### [2] Idling Stop Mode and Non-idling Stop Mode

The ECU 20 includes a CPU (Central Processing Unit) and a memory, or a microcomputer, for example, and is configured to be capable of controlling the engine 6 in either an idling stop mode or a non-idling stop mode. A plurality of types of switches and a plurality of types of sensors provided in the motorcycle 100 are electrically connected to the ECU 20. The plurality of types of switches includes a mode change switch SW0. The mode change switch SW0 is provided in a right or left switch unit 92, for example, and is operated by the rider in order to change a control mode of the ECU 20 between the idling stop mode and the non-idling stop mode.

In a case where the control mode is in the idling stop mode, the ECU 20 stops the engine 6 when a predetermined idling stop condition is satisfied. Specifically, when the idling stop condition is satisfied, the ECU 20 stops at least one of fuel injection by an injector provided in the engine 6 and ignition of a fuel-air mixture by the ignition device provided in the engine 6. Thus, the engine 6 is stopped. The idling stop condition includes a condition relating to at least one of a throttle opening, a traveling speed of the motorcycle 100 and a rotation speed of the crankshaft of the engine 6, for example.

Further, after the engine 6 is stopped due to satisfaction of the idling stop condition, the ECU 20 starts (restarts) the engine 6 when a predetermined idling stop release condition is satisfied. The idling stop release condition is that the right handle grip 91 also serving as an acceleration grip is operated, and the throttle opening is larger than 0, for example.

On the other hand, in a case where the control mode is in the non-idling stop mode, the ECU 20 does not stop the engine 6 even when the idling stop condition is satisfied. In a case where an engine stop switch SW2, described below, is operated by the rider, the ECU 20 stops the engine 6 regardless of which one of the idling stop mode and the non-idling stop mode the control mode is in.

Whether the idle stop condition is satisfied and whether the idling stop release condition is satisfied are determined based on the states of the plurality of types of switches connected to the ECU 20 and the output from the plurality of types of sensors connected to the ECU 20.

### [3] Start-up of Engine 6

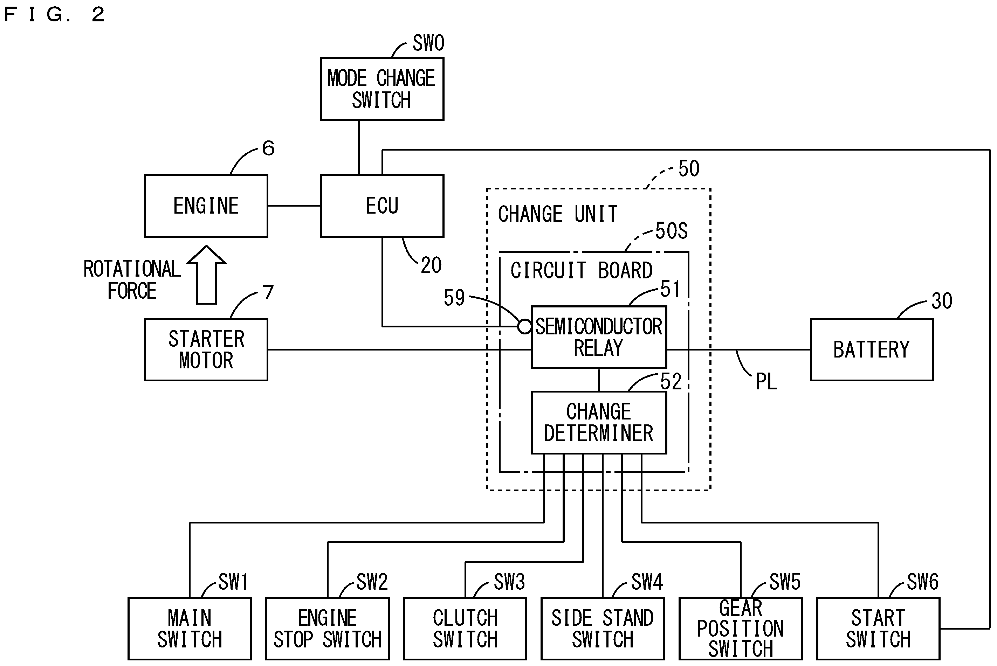

Fig. 2 is a schematic diagram for explaining an electric system for starting the engine 6 of Fig. 1. As shown in Fig. 2, the electric system for starting the engine 6 in the motorcycle 100 of Fig. 1 includes a power supply line PL and a change unit 50 in addition to the engine 6, the starter motor 7, the ECU 20 and the battery 30, described above.

The power supply line PL is provided to connect the starter motor 7 and the battery 30 to each other. The change unit 50 includes a circuit board 50S, a semiconductor relay 51, a change determiner 52 and a temperature sensor 59, and is provided on the power supply line PL. The semiconductor relay 51 and the change determiner 52 are mounted on the circuit board 50S and electrically connected to each other.

The semiconductor relay 51 is configured to be changeable between a connection state in which the starter motor 7 and the battery 30 are electrically connected to each other via the power supply line PL and a disconnection state in which the starter motor 7 and the battery 30 are electrically disconnected from each other.

A main switch SW1, an engine stop switch SW2, a clutch switch SW3, a side stand switch SW4, a gear position switch SW5 and a start switch SW6 are electrically connected to the change determiner 52.

The main switch SW1 is provided in a front portion of the vehicle (Fig. 1), for example, and is operated by the rider in order to supply power to the electrical appliances provided in each part of the motorcycle 100 from the battery 30. In the present example, power can be supplied to each electric appliance of the motorcycle 100 from the battery 30 when the main switch SW1 is in an ON state. That is, the power supply of the motorcycle 100 is turned ON when the main switch SW1 is turned ON. On the other hand, power cannot be supplied to each electric appliance of the motorcycle 100 from the battery 30 when the main switch SW1 is in an OFF state. That is, the power supply of the motorcycle 100 is turned OFF when the main switch SW1 is turned OFF.

The engine stop switch SW2 is provided in the right switch unit 92 (Fig. 1), for example, and is operated by the rider in order to stop the running (rotating) of the engine 6. In the present example, the engine 6 can run when the engine stop switch SW2 is in the ON state. On the other hand, the engine 6 cannot run when the engine stop switch SW2 is in the OFF state.

The clutch switch SW3 is provided in the left switch unit 92 (Fig. 1), for example, and is switched between an ON state and an OFF state in accordance with an operation performed by the rider using the clutch lever 93 (Fig. 1). In the present example, the state of the clutch switch SW3 in a case where the rider tightly holds the clutch lever 93 (the clutch lever 93 is operated) is the ON state. On the other hand, the state of the clutch switch SW3 in a case where the rider does not tightly hold the clutch lever 93 (the clutch lever 93 is not operated) is the OFF state. In this case, the clutch is in a disconnection state when the clutch switch SW3 is in the ON state, and the clutch is in a connection state when the clutch switch SW3 is in the OFF state.

The side stand switch SW4 is provided in the vicinity of the side stand 40 (Fig. 1). In the present example, the state of the side stand switch SW4 in a case where the side stand 40 is in the non-supporting state is an ON state. On the other hand, the state of the side stand switch SW4 in a case where the side stand switch SW4 is in the supporting state is an OFF state.

The gear position switch SW5 is provided at the engine 6 (Fig. 1). In the present example, the state of the gear position switch SW5 in a case where the gear position of the transmission mechanism is in a neutral position, that is, the state of the gear position switch SW5 in a case where a rotational force transmitted from the crankshaft in the transmission mechanism is not transmitted to the rear wheel 9 is an ON state. On the other hand, the state of the gear position switch SW5 in a case where the gear position of the transmission mechanism is in a position other than the neutral position is an OFF state.

The start switch SW6 is provided in the right switch unit 92 (Fig. 1), for example, and is operated by the rider in order to start the engine 6 when in a stop state. In the present example, the start switch SW6 is a button switch that is operable by being depressed by a user. The state of the start switch SW6 being depressed by the rider is an ON state. On the other hand, the state of the start switch SW6 not being depressed by the rider is an OFF state.

Further, in the present embodiment, the start switch SW6 is electrically connected to the ECU 20. Here, the ECU 20 supplies a switch ON signal for turning ON the start switch SW6 to the start switch SW 6 in a case where the control mode is in the idling stop mode and the above-mentioned idling stop release condition is satisfied. In this case, the start switch SW6 is put in the ON state in response to the switch ON signal in a period during which the switch ON signal is supplied from the ECU 20.

The change determiner 52 includes one or a plurality of determination circuits and determines whether a combination of states of the plurality of above-mentioned switches SW1 to SW6 satisfies a predetermined condition for starting the engine 6 (hereinafter referred to as a start-up condition).

Further, in a case where the start-up condition is satisfied, the change determiner 52 puts the semiconductor relay 51 in the connection state. Thus, power of the battery 30 is supplied to the starter motor 7 through the power supply line PL. On the other hand, in a case where the start-up condition is not satisfied, the change determiner 52 puts the semiconductor relay 51 in the disconnection state. Thus, power of the battery 30 is not supplied to the starter motor 7 through the power supply line PL.

With such a configuration, in a case where the engine 6 is in the stop state, when the above-mentioned start-up condition is satisfied, power is supplied from the battery 30 to the starter motor 7, and the starter motor 7 is rotated. Thus, the crankshaft of the engine 6 is rotated by a rotational force of the starter motor 7, and the engine 6 is started.

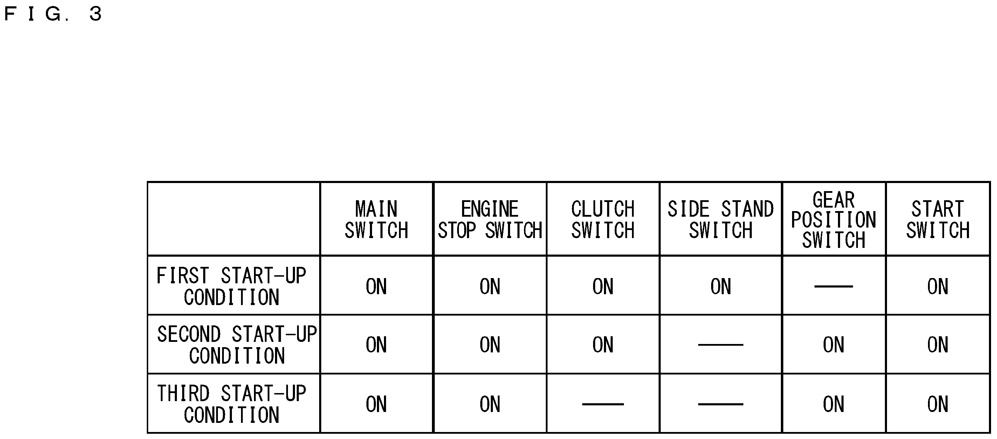

Fig. 3 is a diagram showing one example of start-up conditions. In the present embodiment, the three start-up conditions are respectively defined as a first start-up condition, a second start-up condition and a third start-up condition. In the change determiner 52, determination is made based on the first to third start-up conditions.

As shown in Fig. 3, the first start-up condition is that the main switch SW1, the engine stop switch SW2, the clutch switch SW3, the side stand switch SW4 and the start switch SW6 are in the ON state. In a case where the first start-up condition is satisfied, the semiconductor relay 51 is put in the connection state regardless of the state of the gear position switch SW5.

The second start-up condition is that the main switch SW1, the engine stop switch SW2, the clutch switch SW3, the gear position switch SW5 and the start switch SW6 are in the ON state. In a case where the second start-up condition is satisfied, the semiconductor relay 51 is put in the connection state regardless of the state of the side stand switch SW4.

The third start-up condition is that the main switch SW1, the engine stop switch SW2, the gear position switch SW5 and the start switch SW6 are in the ON state. In a case where the third start-up condition is satisfied, the semiconductor relay 51 is put in the connection state regardless of states of the clutch switch SW3 and the side stand switch SW4.

As shown in Fig. 2, the temperature sensor 59 is provided at the circuit board 50S to be in contact with the semiconductor relay 51 or to be close to the semiconductor relay 51, and detects a temperature of the semiconductor relay 51. The temperature detected by the temperature sensor 59 is supplied to the ECU 20. In a memory of the ECU 20, an upper limit value of the temperature at which the semiconductor relay 51 is considered to run normally is stored in advance as a temperature threshold value.

Here, the ECU 20 determines whether a temperature detected by the temperature sensor 59 is equal to or lower than the temperature threshold value. In a case where the detected temperature is equal to or lower than the temperature threshold value, the ECU 20 controls the engine 6 in accordance with a control mode set at a current point in time. On the other hand, in a case where the detected temperature is higher than the temperature threshold value, even when the control mode is in the idling stop mode, and the idling stop condition is satisfied, the ECU 20 does not execute control to stop the engine 6. Therefore, only in a case where the engine stop switch SW2 is operated or the main switch SW1 is turned OFF, the ECU 20 executes control to stop the engine 6.

Thus, it is not necessary to restart the engine 6 that is stopped by an idling stop function. Therefore, poor starting performance of the engine 6 due to the semiconductor relay 51 not running normally is prevented.

### [4] Attachment Position and Attachment State of Change Unit 50 in Motorcycle 100

The change unit 50 is provided integrally with the starter motor 7 as shown in Fig. 1. More specifically, the semiconductor relay 51 that constitutes the change unit 50 is rigidly fixed to a bracket or the like included in the starter motor 7 with a screw, for example.

The semiconductor relay 51 provided in the change unit 50 does not have a mechanical movable member, thereby being resistant to external vibration and external impact. Therefore, in a case where the change unit 50 is rigidly fixed to the starter motor 7, that is, even in a case where the semiconductor relay 51 is rigidly fixed to the starter motor 7, the semiconductor relay 51 is unlikely to run erroneously. Therefore, it is not necessary to provide a buffer member in the semiconductor relay 51. Thus, it is not necessary to ensure a buffer member for the semiconductor relay 51 or an installation space for the buffer member.

### [5] Effects

(a) In the above-mentioned motorcycle 100, the semiconductor relay 51 is used to change between the state in which power is supplied from the battery 30 to the starter motor 7 and the state in which power is not supplied from the battery 30 to the starter motor 7. In the semiconductor relay 51, the electrical connection relationship between the battery 30 and the starter motor 7 is changed by an electrical circuit including a semiconductor instead of a stationary contact and a movable contact of a mechanical relay. Therefore, the semiconductor relay 51 is unlikely to deteriorate in accordance with the magnitude of a current flowing in the semiconductor relay 51 and the frequency of change of state as compared to a mechanical relay. Therefore, the frequency of replacement of the semiconductor relay 51 is reduced. Further, as described above, it is not necessary to ensure a buffer member for the semiconductor relay 51 or an installation space for the buffer member in the vicinity of the starter motor 7.
   As a result, the frequency of maintenance for replacement of vehicle component members is reduced, and flexibility in layout of the vehicle component members is improved.
(b) Further, the semiconductor relay 51 has a high heat resistance temperature as compared to a mechanical relay. Therefore, even in a case where the starter motor 7 is attached to a position in the vicinity of the engine 6, an occurrence of erroneous running caused by heat generated by the engine 6 is reduced. Thus, flexibility in layout of the change unit 50 is improved.

### [6] Another Example of Attachment Position of Change Unit 50 in Motorcycle 100

In the motorcycle 100, the change unit 50 may be rigidly fixed to a constituent element other than the starter motor 7.

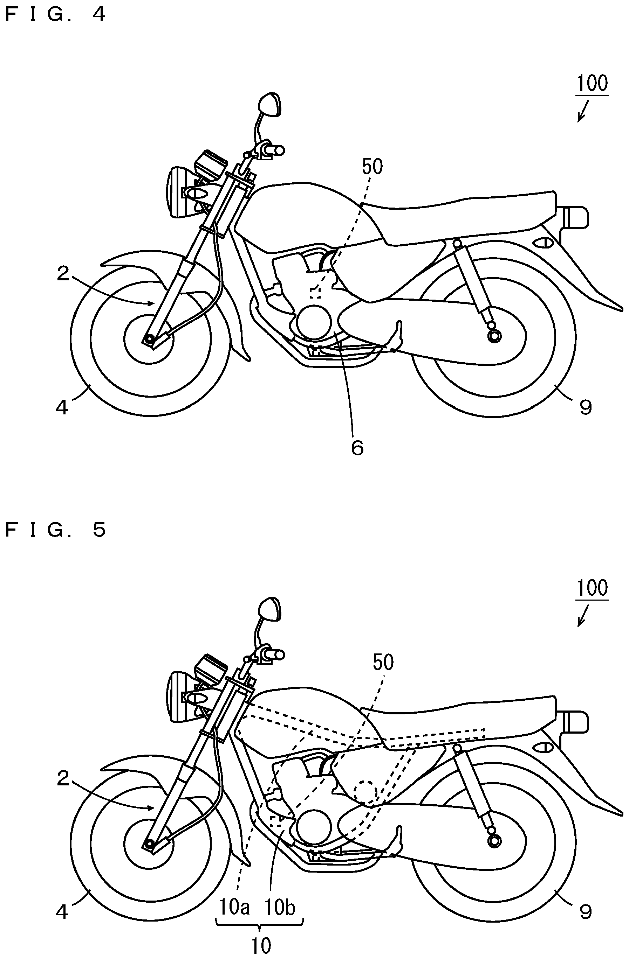

Figs. 4 to 6 are side views showing other examples of the attachment position of the change unit 50 in the motorcycle 100. In the example of Fig. 4, the change unit 50 is rigidly fixed to a crankcase of the engine 6. In this case, the change unit 50 can be handled integrally with the engine 6. In the example of Fig. 5, the change unit 50 is rigidly fixed to the body frame 10. In this case, the change unit 50 can be handled integrally with the body frame 10.

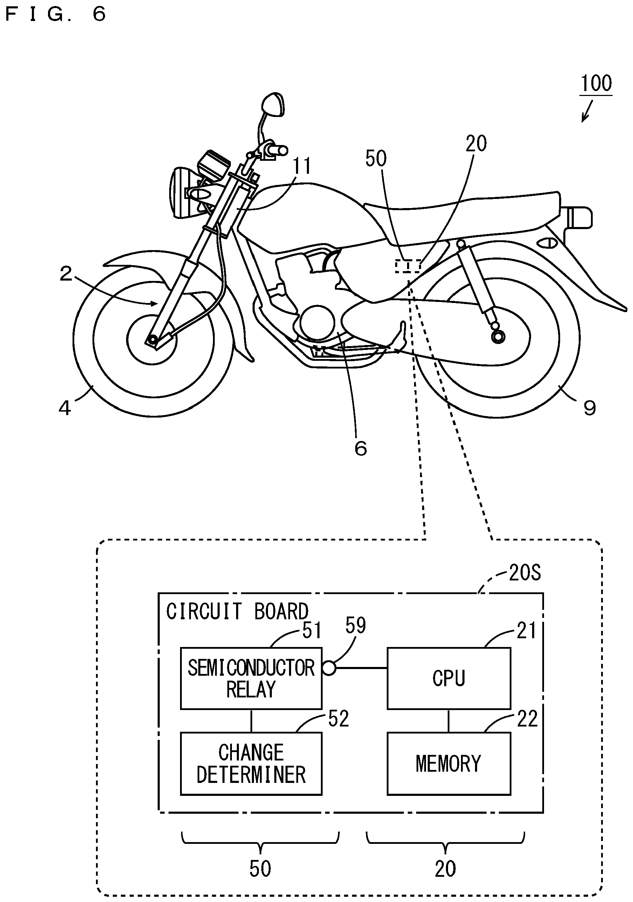

In the example of Fig. 6, the change unit 50 is rigidly fixed to the ECU 20. In this case, the change unit 50 can be handled integrally with the ECU 20. Further, in the example of Fig. 6, as indicated in the dotted balloon, the CPU 21 and the memory 22 that constitute the ECU 20, and the semiconductor relay 51, the change determiner 52 and the temperature sensor 59 of the change unit 50 are mounted on a common circuit board 20S. That is, the semiconductor relay 51 is rigidly fixed to the ECU 20 via the circuit board 20S. With such a configuration, the change unit 50 and the ECU 20 can be fabricated at the same time. Thus, the number of manufacturing steps is reduced, and a reduction in cost of the motorcycle 100 is realized.

### [7] Other Embodiments

(a) While the ECU 20 is configured such that the control mode is changeable between the idling stop mode and the non-idling stop mode in the motorcycle 100 according to the above-mentioned embodiment, the present invention is not limited to this. The ECU 20 may be configured to control the engine 6 only in the idling stop mode. Because the change unit 50 including the semiconductor relay 51 is used also in this case, the effects similar to those of the above-mentioned embodiment can be obtained.
(b) While the semiconductor relay 51 and the change determiner 52 are mounted on the common circuit board 20S or 50S in the above-mentioned embodiment, the semiconductor relay 51 and the change determiner 52 may be respectively and separately mounted on two circuit boards. That is, the semiconductor relay 51 and the change determiner 52 may be provided separately at a vehicle main body.
(c) While the change determiner 52 that determines whether the start-up condition is satisfied and changes the state of the semiconductor relay 51 is constituted by the one or plurality of determination circuits in the above-mentioned embodiment, the present invention is not limited to this. The functions of the change determiner 52 may be implemented by storage of a determination program for determining whether the start-up condition is satisfied and execution of the determination program by the CPU of the ECU 20. In this case, the connection state and the disconnection state of the semiconductor relay 51 are controlled by the ECU 20.
(d) While the ECU 20 supplies a switch ON signal to the start switch SW6 in a case where the idling stop release condition is satisfied in the above-mentioned embodiment, the present invention is not limited to this. The ECU 20 may supply an ON state signal indicating that the start switch SW6 is in the ON state to the change determiner 52 instead of supplying the switch ON signal to the start switch SW6. In this case, the change determiner 52 may determine that the start switch SW6 is in the ON state when receiving the ON state signal.
(e) The start-up condition that is applicable to the motorcycle 100 is not limited to the example of the above-mentioned first to third start-up conditions. The start-up condition may be defined based on a state of part of the main switch SW1, the engine stop switch SW2, the clutch switch SW3, the gear position switch SW5 and the start switch SW6, described above. Alternatively, the start-up condition may be defined based on a state of a switch other than the above-mentioned various switches SW1 to SW6. Alternatively, the start-up condition may be defined based on output of various sensors (a speed sensor and the like) provided in the motorcycle 100.
(f) The semiconductor relay 51 may be rigidly fixed to the battery 30 other than the starter motor 7, the engine 6, the body frame 10 or the ECU 20. Alternatively, the semiconductor relay 51 may be rigidly fixed to an intermediate portion of one harness provided in the motorcycle 100. In this case, the one harness constitutes part of the vehicle main body.

Further, a fuse is provided in the electric system of the motorcycle 100. As such, the semiconductor relay 51 may be rigidly fixed to the inside of a fuse box containing the fuse. In this case, the fuse box constitutes part of the vehicle main body.

(g) In the electric system of the motorcycle 100, a circuit for suppressing an inrush current flowing in the starter motor 7 during start-up of the engine 6 may be provided.

### [8] Correspondences between Constituent Elements in Claims and Parts in Preferred Embodiments

In the following paragraphs, non-limiting examples of correspondences between various elements recited in the claims below and those described above with respect to various preferred embodiments of the present disclosure are explained.

In the above-mentioned embodiment, the head pipe 11 and the body frame 10 are examples of a frame, the ECU 20 is an example of a controller, and the configuration of the motorcycle 100 except for the semiconductor relay 51 is an example of a vehicle main body. Specifically, a portion that includes the head pipe 11, the body frame 10, the engine 6, the battery 30, the starter motor 7 and the ECU 20 and excludes the semiconductor relay 51 in the motorcycle 100 is an example of the vehicle main body. Further, the circuit boards 20S, 50S are examples of a circuit board, and the temperature sensor 59 is an example of a temperature detector.

As each of constituent elements recited in the claims, various other elements having configurations or functions described in the claims can be also used.

## Claims

1. A straddled vehicle (100) comprising:
a vehicle main body that includes a frame (10), an engine (6) supported at the frame, a battery (30), a starter motor (7) that rotates a crankshaft of the engine by electric power of the battery, and a controller (20) that executes idling stop control of the engine;
a semiconductor relay (51) that electrically connects the battery and the starter motor to each other such that electric power is supplied from the battery to the starter motor, in a case where the engine is in a stop state and a predetermined start-up condition is satisfied; and
a change determiner (52) that determines whether the start-up condition is satisfied, and changes a state of the semiconductor relay between a connection state in which the battery and the starter motor are electrically connected to each other and a disconnection state in which the battery and the starter motor are not electrically connected to each other based on a result of determination,
wherein the semiconductor relay is mounted on a circuit board (50S) rigidly fixed to the vehicle main body.

2. The straddled vehicle according to claim 1, wherein the semiconductor relay (51) is rigidly fixed to the starter motor (7).

3. The straddled vehicle according to claim 1, wherein the semiconductor relay (51) is rigidly fixed to the engine (6).

4. The straddled vehicle according to claim 1, wherein the semiconductor relay (51) is rigidly fixed to the frame (10).

5. The straddled vehicle according to claim 1, wherein
the controller (20) is mounted on the circuit board (50S), and
the semiconductor relay (51) is rigidly fixed to the controller via the circuit board.

6. The straddled vehicle according to claim 1, wherein the change determiner (52) is mounted on the circuit board (50S).

7. The straddled vehicle according to any one of the preceding claims, further comprising a temperature detector (59) that detects a temperature of the semiconductor relay (51), wherein
the controller (20) does not stop the engine by the idling stop control in a case where a temperature detected by the temperature detector is higher than a predetermined threshold value.

## Patentansprüche

1. Grätschsitzfahrzeug (100), das Folgendes umfasst:
einen Fahrzeughauptkörper, der einen Rahmen (10), einen Motor (6), der an dem Rahmen getragen wird, eine Batterie (30), einen Anlassermotor (7), der eine Kurbelwelle des Motors durch Elektroenergie von der Batterie dreht, und eine Steuereinrichtung (20), die eine Leerlauf-Stopp-Regelung des Motors ausführt, einschließt,
ein Halbleiterrelais (51), das die Batterie und den Anlassermotor elektrisch miteinander verbindet, so dass in einem Fall, in dem sich der Motor in einem Stoppzustand befindet und eine vorbestimmte Startbedingung erfüllt ist, Elektroenergie von der Batterie dem Anlassermotor zugeführt wird, und
eine Veränderungsfeststellungseinrichtung (52), die feststellt, ob die Startbedingung erfüllt ist, und einen Zustand des Halbleiterrelais auf Grundlage eines Feststellungsergebnisses verändert zwischen einem Verbindungszustand, in dem die Batterie und der Anlassermotor elektrisch miteinander verbunden sind, und einem Trennungszustand, in dem die Batterie und der Anlassermotor nicht elektrisch miteinander verbunden sind,
wobei das Halbleiterrelais auf einer Leiterplatte (50S) montiert ist, die starr an dem Fahrzeughauptkörper befestigt ist.

2. Grätschsitzfahrzeug nach Anspruch 1, wobei das Halbleiterrelais (51) starr an dem Anlassermotor (7) befestigt ist.

3. Grätschsitzfahrzeug nach Anspruch 1, wobei das Halbleiterrelais (51) starr an dem Motor (6) befestigt ist.

4. Grätschsitzfahrzeug nach Anspruch 1, wobei das Halbleiterrelais (51) starr an dem Rahmen (10) befestigt ist.

5. Grätschsitzfahrzeug nach Anspruch 1, wobei
die Steuereinrichtung (20) auf der Leiterplatte (50S) montiert ist, und
das Halbleiterrelais (51) über die Leiterplatte starr an der Steuereinrichtung befestigt ist.

6. Grätschsitzfahrzeug nach Anspruch 1, wobei die Veränderungsfeststellungseinrichtung (52) auf der Leiterplatte (50S) montiert ist.

7. Grätschsitzfahrzeug nach einem der vorhergehenden Ansprüche, das ferner einen Temperaturdetektor (59) umfasst, der eine Temperatur des Halbleiterrelais (51) erfasst, wobei
die Steuereinrichtung (20) in einem Fall, in dem eine durch den Temperaturdetektor erfasste Temperatur höher ist als ein vorbestimmter Schwellenwert, den Motor nicht durch die Leerlauf-Stopp-Regelung stoppt.

## Revendications

1. Véhicule à enfourcher (100) comprenant :
un corps principal de véhicule qui inclut un cadre (10), un moteur (6) supporté au niveau du cadre, une batterie (30), un moteur de démarrage (7) qui entraîne en rotation un vilebrequin du moteur au moyen de l'énergie électrique de la batterie, et un dispositif de commande (20) qui exécute une commande de butée de ralenti du moteur;
un relais à semiconducteur (51) qui connecte électriquement la batterie et le moteur de démarrage de telle sorte que de l'énergie électrique soit fournie depuis la batterie au moteur de démarrage dans le cas où le moteur est dans un état d'arrêt et une condition de démarrage prédéterminée est satisfaite ; et
un dispositif de détermination de modification (52) qui détermine si la condition de démarrage est ou non satisfaite et qui modifie un état du relais à semiconducteur entre un état de connexion dans lequel la batterie et le moteur de démarrage sont connectés électriquement et un état de déconnexion dans lequel la batterie et le moteur de démarrage ne sont pas connectés électriquement sur la base d'un résultat de détermination,
dans lequel le relais à semiconducteur est monté sur une carte de circuit (50S) fixée de façon rigide au corps principal de véhicule.

2. Véhicule à enfourcher selon la revendication 1, dans lequel le relais à semiconducteur (51) est fixé de façon rigide au moteur de démarrage (7).

3. Véhicule à enfourcher selon la revendication 1, dans lequel le relais à semiconducteur (51) est fixé de façon rigide au moteur (6).

4. Véhicule à enfourcher selon la revendication 1, dans lequel le relais à semiconducteur (51) est fixé de façon rigide au cadre (10).

5. Véhicule à enfourcher selon la revendication 1, dans lequel
le dispositif de commande (20) est monté sur la carte de circuit (50S), et
le relais à semiconducteur (51) est fixé de façon rigide au dispositif de commande via la carte de circuit.

6. Véhicule à enfourcher selon la revendication 1, dans lequel le dispositif de détermination de modification (52) est monté sur la carte de circuit (50S).

7. Véhicule à enfourcher selon l'une quelconque des revendications précédentes, comprenant en outre un détecteur de température (59) qui détecte une température du relais à semiconducteur (51), dans lequel
le dispositif de commande (20) n'arrête pas le moteur au moyen de la commande de butée de ralenti dans le cas où une température détectée par le détecteur de température est supérieure à une valeur de seuil prédéterminée.
